## Europäisches Patentamt
## European Patent Office
## Office européen des brevets

(19)

(11) Numéro de publication: **0 025 395**
**B1**

(12)

# FASCICULE DE BREVET EUROPEEN

(45) Date de publication du fascicule du brevet:
**01.08.84**

(51) Int. Cl.³: **G 21 C 3/34**

(21) Numéro de dépôt: **80401263.1**

(22) Date de dépôt: **04.09.80**

(54) Grille d'espacement pour éléments combustibles de réacteurs nucléaires.

(30) Priorité: **07.09.79 FR 7922437**

(43) Date de publication de la demande:
**18.03.81 Bulletin 81/11**

(45) Mention de la délivrance du brevet:
**01.08.84 Bulletin 84/31**

(84) Etats contractants désignés:
**BE DE GB IT NL SE**

(56) Documents cités:
**DE - A - 1 439 362**
**DE - A - 1 944 932**
**FR - A - 1 495 658**
**FR - A - 1 534 275**
**FR - A - 2 144 843**
**FR - A - 2 200 587**
**FR - A - 2 337 407**
**US - A - 3 746 619**

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Feutrel, Claude, 105, Grande Rue, F-91430 Vauhallan (FR)**

(74) Mandataire: **Mongrédien, André et al, c/o BREVATOME 25, rue de Ponthieu, F-75008 Paris (FR)**

ACTORUM AG

# Description

L'invention concerne une grille d'espacement pour un faisceau d'éléments combustibles d'un assemblage de réacteur nucléaire comportant un ensemble de deux familles de tôles respectivement parallèles dans chaque famille, et perpendiculaires d'une famille à l'autre pour délimiter des alvéoles de section carrée, traversés chacun par un élément combustible du faisceau, de larges évidements dans la surface d'au moins une paroi de l'alvéole qui déterminent au moins un ressort, chaque ressort étant constitué par deux lamelles de tôle formant une voûte flexible, par un tenon de tôle reliant le centre de chacune desdites lamelles et par deux languettes solidaires par un de leurs côtés du tenon de tôle et opposées l'une à l'autre par ce même côté.

De telles grilles ont pour rôle de réaliser l'espacement d'un faisceau d'éléments combustibles nucléaires dans un assemblage de réacteur nucléaire, ces éléments devant être maintenus parallèles entre eux et selon un réseau déterminé, en assurant en outre un appui élastique de ces éléments selon différentes régions successives réparties selon leur longueur afin en particulier, d'éviter leur vibration sous l'effet de la circulation d'un milieu liquide de refroidissement s'écoulant à leur contact.

On connaît déjà des réalisations de grilles d'espacement correspondant au préambule de la revendication (FR-A-2 338 549). Dans la grille décrite par ce document, chaque ressort est constitué par deux lamelles de tôle formant une voûte flexible, un tenon de tôle reliant le centre de chacune desdites lamelles et par deux languettes solidaires par un de leur côté dudit tenon de tôle et opposées l'une à l'autre par ce même côté. Une partie cintrée, destinée à transmettre l'effort du ressort à l'élément combustible est formée à l'extrémité de chacune desdites lamelles et en saillie par rapport à elle. Un ressort de ce type comporte trois points d'appui sur l'élément combustible. En particulier le point d'appui central en U entre pour une part importante dans la perte de charge hydraulique globale de la grille. De plus, ce point d'appui central sollicité en cours de flexion du système traduit une courbe d'effort à deux incidences.

Les languettes ont été prévues pour s'appliquer contre le crayon combustible au cas où, au cours du fonctionnement du réacteur nucléaire, le point d'appui central viendrait à se décoller du crayon combustible. Mais des essais ont montré que la vibration des languettes sous l'effet de l'écoulement d'un milieu liquide de refroidissement entraîne une usure de la gaine des crayons combustibles qui peut aller jusqu'à la traverser complètement.

La présente invention a pour but de remédier à ces inconvénients. L'invention, telle qu'elle est caractérisée dans la revendication, résout le problème consistant à créer une grille d'espacement pour éléments combustibles de réacteur nucléaire dans laquelle les ressorts de la grille présentent seulement deux points d'appui, le ressort permet une flèche importante, et les patins d'appui ne peuvent pas se décoller du crayon combustible au cours du fonctionnement quelle que soit la déformation de ce dernier.

Les avantages obtenus grâce à cette invention consistent essentiellement en ce que le ressort présente une plus grande rigidité de la languette à sa base, c'est-à-dire à l'endroit où le couple de torsion présente la valeur la plus élevée. En outre, les couples de torsion produits par les languettes triangulaires à base large, de sens opposé, s'annulent respectivement et aucun effet de torsion déformant la paroi mince de l'alvéole n'est transmis à cette dernière. Enfin les pertes hydrauliques sont réduites par la présence de deux points d'appui seulement.

Le ressort de la grille fonctionne selon le principe d'une flexion composée, qui permet d'obtenir des flèches importantes dans un espace réduit. De ce fait, l'introduction des éléments combustibles, dont la longueur peut être importante, à l'intérieur de la grille, est grandement facilitée.

Chaque élément combustible comporte huit points d'appui dans chaque alvéole, à savoir quatre points d'appui sur des bossages rigides et quatre points d'appui sur les extrémités des ressorts. L'élément combustible est ainsi parfaitement maintenu dans l'alvéole.

Par ailleurs, les extrémités des ressorts sont peu distantes axialement des bossages rigides. On n'introduit ainsi aucune contrainte supplémentaire de flexion dans l'élément combustible.

On sait, de plus, qu'un certain nombre de manchons sont soudés sur la grille d'espacement, et répartis dans le faisceau des éléments combustibles pour le passage des tubes guides. De la même manière que pour les éléments combustibles, le ressort à flexion composée réalisé conformément à l'invention facilite l'implantation des manchons de passage des tubes guides, par des parties planes sur lesquelles les bords des lumières pratiqués dans le manchon peuvent être liés par brasure. Par ailleurs, un avantage important est constitué par la réduction de la section apparente du ressort dans le passage du fluide caloporteur. En effet, comme cela sera expliqué en référence aux figs jointes, une fois l'élément combustible mis en place, le profil s'efface à l'intérieur de l'épaisseur de la paroi de l'alvéole.

Enfin, la grille permet d'obtenir une linéarité de l'effort sur l'élément combustible en fonction de la flèche du ressort.

De préférence, cette grille est réalisée en Inconel.

L'invention sera mieux comprise à la lecture de la description qui suit, d'un exemple donné à titre purement indicatif, mais non limitatif, de réalisation de l'invention. La description se réfère aux figures annexées, sur lesquelles:

– la fig. 1 représente trois tôles minces partiellement emboîtées d'une grille réalisée conformément à la présente invention;

– la fig. 2 représente une vue de face d'un ressort d'une grille réalisée conformément à la présente invention, et
– la fig. 3 représente une vue de profil du ressort représenté sur la fig. 2.

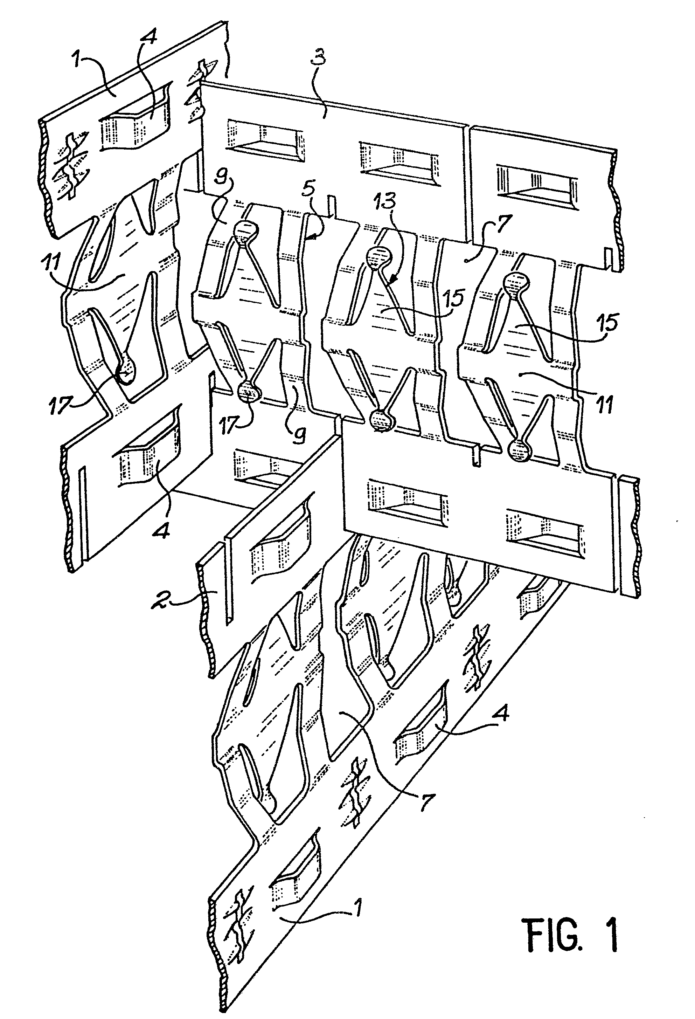

On a représenté sur la fig. 1 trois tôles référencées 1, 2 et 3, d'une grille d'espacement pour éléments combustibles de réacteur nucléaire réalisée conformément à la présente invention. Cette grille d'espacement comporte un cadre extérieur (non représenté) formé de plaques réunies l'une à l'autre par leurs extrémités en contact au moyen de points de soudure. A l'intérieur du cadre formé par les plaques latérales sont montées deux familles de tôles parallèles les unes aux autres dans une même famille, telles que les tôles 1 et 2, et perpendiculaires entre elles d'une famille à l'autre, par exemple la tôle 3 par rapport aux tôles 1 et 2, de telle sorte qu'elles délimitent une série d'alvéoles dans lesquels s'engagent des éléments combustibles (non représentés). A l'intérieur de chaque alvéole, on trouve des bossages rigides 4 sur lesquels les éléments combustibles sont maintenus en appui par la force exercée par le ressort de maintien 5. On a pratiqué de larges évidements 7 dans les tôles constituant la grille, de manière à déterminer, dans la paroi des alvéoles, deux lamelles de tôles 9, formant une voûte flexible. Un tenon de tôle 11 relie le centre de chacune des lamelles 9. Deux languettes 15 de forme triangulaire sont solidaires par un de leurs côtés du tenon 11. Au sommet de chaque languette 15 en forme de triangle, on trouve un patin curviligne 17, par lequel la force d'appui du ressort 5 est transmise à l'élément combustible.

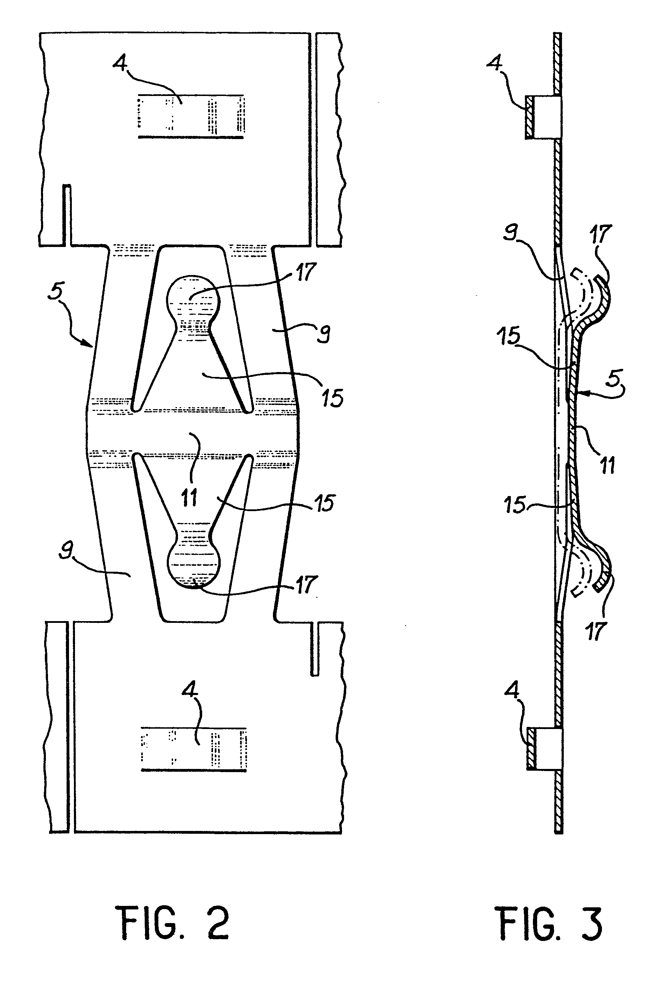

Sur la fig. 2, on a représenté une vue de face d'un ressort 5 réalisé conformément à la présente invention. On retrouve les deux lamelles de tôle 9 formant une voûte flexible, le tenon 11 reliant le centre de chacune des lamelles 9, les deux languettes triangulaires 15 solidaires par un de leurs côtés du tenon de tôle 11 et terminées chacune par un patin curviligne 17. On remarque également les deux appuis rigides 4 sur lesquels l'élément combustible est maintenu en appui par le ressort pratiqué dans la face parallèle opposée de l'alvéole.

Sur la fig. 3, on a représenté une vue de profil du ressort 5. Cette vue permet de voir la forme de la voûte flexible constituée par les lamelles 9, ainsi que le profil des languettes 15 et celui des patins curvilignes 17.

On voit donc que la flexion du ressort 5, lorsque l'élément combustible est en place, se compose d'une part de la flexion de la voûte flexible 9, et d'autre part de celle de chacune des languettes 15. Il en résulte que ce ressort permet une flèche importante dans un espace réduit. Par suite, la flèche du ressort peut varier dans une large mesure sans que la pression d'appui sorte du domaine d'utilisation prévu.

La grande largeur des languettes 15 à leur base permet au ressort 5 d'avoir une raideur suffisante pour assurer un bon maintien des éléments combustibles nucléaires, et cela sans qu'il soit nécessaire de recourir à un métal présentant une forte absorption des neutrons. En effet, un ressort tel que 5 peut être découpé dans des grilles réalisées en un matériau présentant une faible absorption neutronique, tel que le Zircalloy. Naturellement, d'autres matériaux sont envisageables pour la fabrication de ces grilles.

D'autre part, le ressort 5 comporte seulement deux points d'appui sur l'élément combustible. Ces points d'appui sont constitués par des patins curvilignes 17 sont la forme en saillie sur le ressort 5 permet, une fois l'élément combustible mis en place, que le profil du ressort 5, à l'exception du patin curviligne 17, s'efface entièrement dans le profil de la paroi de l'alvéole. On a représenté, en traits pointillés, une telle position du ressort. Cette disposition permet une diminution de la résistance opposée à la circulation du fluide de refroidissement, et par suite, de meilleures performances hydrauliques de la grille.

**Revendication**

Grille d'espacement pour un faisceau d'éléments combustibles d'un assemblage de réacteur nucléaire, comportant un ensemble de deux familles de tôles (1, 2, 3) respectivement parallèles dans chaque famille, et perpendiculaires d'une famille à l'autre, pour délimiter des alvéoles de section carrée traversés chacun par un élément combustible du faisceau, de larges évidements (7) dans la surface d'au moins une paroi de l'alvéole y déterminent au moins un ressort (5), chaque ressort étant constitué par deux lamelles de tôles (9) formant une voûte flexible, par un tenon de tôle (11) reliant le centre de chacune desdites lamelles (9), et par deux languettes (15) solidaires par un de leurs côtés dudit tenon de tôle (11), et opposées l'une à l'autre par ce même côté, caractérisé en ce que lesdites languettes (15) sont triangulaires et qu'un patin curviligne (17), destiné à transmettre l'effort du ressort (5) à l'élément combustible, est formé au sommet de chacune desdites languettes (15) et en saillie par rapport à elles, de telle sorte qu'une fois l'élément combustible mis en place, le profil du ressort (5) s'efface entièrement, à l'exception des deux patins curvilignes (17), dans la paroi de l'alvéole.

**Claim**

A spacing grid for a nest of fuel elements for a nuclear reactor assembly, comprising a set of two groups of plates (1, 2, 3) respectively parallel in each group, and perpendicular from one group to another, to define cavities of square section through each of which extends a fuel element of the nest, wide openings (7) in the surface of at least one wall of the cavity defining therein at least one spring (5), each spring being formed by two strips of plates (9) forming a flexible arch, by a plate web (11) connecting the centre of each of the said strips (9), and by two tongues (15) connected by one of their sides to the said plate web (11), and being disposed opposite one another by the same side, characterised in that the said tongues (15) are triangular and a curved shoe (17) adapted to transmit the force of the spring (5) to the fuel element is formed at the apex of each of the said tongues (15) and projects with respect thereto, so that once the fuel element is in position, the profile of the spring (5) is fully retracted, except for the two curved shoes (17), in the cavity wall.

**Patentanspruch**

Abstandshaltergitter für Kernbrennelemente für einen Reaktor, mit zwei Gruppen von jeweils in jeder Gruppe parallelen Blechen (1, 2, 3), wobei diejenigen einer Gruppe senkrecht zu denen der anderen Gruppe sind und Zellen mit viereckigem Querschnitt begrenzen, von denen durch jede ein Brennelement hindurchgeht und die in wenigstens einer ihrer Wände grosse Aussparungen (7) aufweisen, die dort wenigstens eine Feder (5) definieren, wobei jede Feder aus zwei Blechlamellen (9), die eine flexible Wölbung bilden, einem Blechsteg (11), der die Mitten der Lamellen (9) verbindet, und zwei Zungen (15) besteht, die mit jeweils einer ihrer Seiten mit dem Blechsteg (11) fest verbunden sind und einander mit der gleichen Seite gegenüberliegen, dadurch gekennzeichnet, dass die Zungen (15) dreieckförmig sind und dass ein gekrümmter Fuss (17), der zum Übertragen der Federkraft auf das Brennelement vorgesehen ist, an der Spitze jeder Zunge (15) ausgebildet ist und von dieser derart vorspringt, dass das Profil der Feder (5) mit Ausnahme der beiden gekrümmten Füsse (17) ganz in der Zellenwand verschwindet, wenn das Brennelement einmal eingebracht ist.

FIG. 1

FIG. 2

FIG. 3